Europäisches Patentamt

European Patent Office

Office européen des brevets

(11) Veröffentlichungsnummer: **0 212 560 B1**

# (12) EUROPÄISCHE PATENTSCHRIFT

(45) Veröffentlichungstag der Patentschrift: **04.03.92**

(51) Int. Cl.5: **C02F 1/28**, C02F 3/04

(21) Anmeldenummer: **86111177.1**

(22) Anmeldetag: **12.08.86**

(54) **Verfahren zur Verringerung der Belastung des Grundwassers durch Alkohole.**

(30) Priorität: **14.08.85 DE 3529193**

(43) Veröffentlichungstag der Anmeldung:
**04.03.87 Patentblatt 87/10**

(45) Bekanntmachung des Hinweises auf die
Patenterteilung:
**04.03.92 Patentblatt 92/10**

(84) Benannte Vertragsstaaten:
**AT BE CH DE FR GB LI NL SE**

(56) Entgegenhaltungen:

**CHEMICAL ABSTRACTS, Band 101, Nr. 10, 3. September 1984, Seite 354, Zusammenfassung Nr. 78482g, Columbus, Ohio, US; H. LOEKKE: "Leaching of ethylene glycol and ethanol in subsoils", & WATER, AIR, SOIL POLLUT. 1984, 22(4), 373-87**

(73) Patentinhaber: **Blasy, Ludwig, Dipl.-Ing. Dr.
Moosstrasse 3
W-8088 Eching/Ammersee(DE)**

(72) Erfinder: **Blasy, Ludwig, Dipl.-Ing. Dr.
Moosstrasse 3
W-8088 Eching/Ammersee(DE)**

(74) Vertreter: **Kador & Partner
Corneliusstrasse 15
W-8000 München 5(DE)**

**Beschreibung**

Die Erfindung betrifft ein Verfahren zur Verringerung der Belastung des Grundwassers durch Alkohole bei Einsatz von Alkoholen zur Enteisung von Betriebsflächen, insbesondere Flugbetriebsflächen.

Zur Enteisung von Flugbetriebsflächen, d.h. Start- und Landebahnen und Rollbahnen und dergl., werden heute bevorzugt Alkohole eingesetzt, da diese zu den nicht umweltbelastenden Endstoffen Wasser und Kohlendioxid von Bodenbakterien abgebaut werden.

Als Alkohole werden meist Ethylenglykol, Diethylenglykol, Isopropylalkohol und/oder Propylenglykol eingesetzt. Es kommen jedoch alle Alkohole in Betracht, die eine Enteisung bewirken.

Diese Alkohole sollen in höherer Konzentration nicht in das Grundwasser gelangen. Zum einen deshalb, weil einige der Alkohole wie z.B. Diethylenglykol, in höheren Konzentrationen giftig sind, zum anderen aber, weil bei ihrer Umsetzung zu Wasser und $CO_2$ Sauerstoff verbraucht wird. Dadurch verarmen die Gewässer an Sauerstoff und es besteht die Gefahr, daß die Gewässer umkippen und die tierischen Lebewesen mangels ausreichendem Sauerstoff eingehen. Letztlich jedoch auch deshalb, weil in zunehmender Weise per Gesetz eine anthropogene Veränderung der Grundwasserbeschaffenheit verhindert werden soll.

Der Erfindung liegt die Aufgabe zu Grunde, ein Verfahren zu schaffen, mit dem es gelingt, bei Verwendung von Alkoholen zur Enteisung von Betriebsflächen die im versickerten Schmelzwasser vorhandenen Alkohole vollständig oder weitestgehend abzubauen, so daß die Belastung von Gewässern durch Alkohole vermieden bzw. minimiert wird.

Diese Aufgabe wird dadurch gelöst , daß Abbauzonen für die Alkohole vorgesehen werden.

Gegenstand der Erfindung ist ein Verfahren zur Verringerung der Belastung von Gewässern durch Alkohole bei Einsatz von Alkoholen zur Enteisung von Flugbetriebsflächen, das dadurch gekennzeichnet ist, daß künstliche Abbauzonen in der Sickerzone des Untergrundes für das mit Alkohol belastete Schmelzwasser vorgesehen werden.

Der Erfindung liegt die Überlegung zu Grunde, das mit Alkohol versetzte Schmelzwasser möglichst großflächig dort wo es anfällt in den Untergrund zu versickern und die Versickerungszone künstlich so zu gestalten, daß durch Optimierung von Speicherwirkung der Sickerzone, Vergleichmäßigung des Sickerstromes, Belüftung und Temperatur ein vollständiger oder weitgehender Abbau des Alkohols erfolgt.

Vorzugsweise liegen diese Abbauzonen neben den Flugbetriebsflächen, beispielsweise seitlich im Bereich der Böschungen längs der Start- und Landebahn.

Die Erfindung wird hier in Bezug auf Flugbetriebsflächen beschrieben, es ist jedoch offensichtlich, daß auch andere Betriebsflächen und Verkehrsflächen wie Straßen, Parkplätze, Sportplätze und dergl. umfaßt sind.

Bei einem vorwiegend kiesig oder kluftigen Untergrund von Flugbetriebsflächen und dergl. können die im Schmelzwasser enthaltenen Alkohole zu rasch versickern und gelangen damit in zu hohen Konzentrationen in das Grundwasser. Die Bodenbakterien sind bei der kurzen Verweilzeit nicht in der Lage, die Alkohole abzubauen. Bei einem ausschließlich feinkörnigem Untergrund hingegen kann die für den Alkoholabbau durch Bakterien erforderliche Sauerstoffzufuhr aus der Luft zu gering sein und dadurch der Alkohol in unerwünscht hohen Konzentrationen in das Grundwasser gelangen. Gemäß der Erfindung werden Maßnahmen vorgeschlagen, die durch die künstliche Veränderung des Kornaufbaues der Sickerzone mit oder ohne Zugabe von Zusatzstoffen einerseits die Verweilzeit der Alkohole in der Sickerzone erhöhen und dadurch bewirken, daß die Alkohole in höherem Maße abgebaut werden; andererseits solche verbesserten Lebensbedingungen für die Bakterien zu schaffen, daß die Abbaurate erhöht wird.

Eine Verlängerung der Verweilzeit kann dadurch erfolgen, daß Abbauzonen in der Art vorgesehen werden, daß die Sickerzone aus wechselweisen Schichten aus sandigem Kies und schluffigem Sand bestehen. Durch den schluffigen Sand werden wegen seiner größeren Oberfläche die Populationsflächen der Bakterien vergrößert und wegen der geringen Durchlässigkeit die Verweilzeit länger. Durch den sandigen Kies wird wiederum wegen der großen Bandbreite der Porenhohlraumgrößen eine gute Belüftung des Untergrundes und eine Vergleichmäßigung des Sickerwasserabflusses erreicht.

Eine zusätzliche Verlängerung der Verweilzeit kann auch dadurch erreicht werden, daß unter die Abbauzone eine wasserundurchlässige oder gering wasserdurchlässige Folie verlegt wird. Dadurch wird der Fließweg des abzubauenden Schmelzwassers von der senkrechten in die horizontale Richtung bis zum Rand der Abbauzone abgelenkt und kann dadurch erheblich vergrößert werden. Diese Vergrößerung des Fließweges ist vor allem dann von Vorteil, wenn der natürliche Flurabstand des Grundwassers gering ist.

Die Abbauzonen können vorzugsweise auch Adsorptions- und/oder Absorptionsmittel enthalten. Es werden solche Substanzen ausgewählt, die in der Lage sind, die jeweils eingesetzten Alkohole zu halten und deren Abbau zu begünstigen.

Als Adsorptionsmittel kommen insbesondere Aktivkohle, Kieselsäuregele, Aluminiumoxide, Magnesium- und Calciumverbindungen, Talk, Bleicherden, Glaspulver, Kieselgur und Zeolithe in Betracht.

Eine weitere geeignete Maßnahme besteht darin, die Abbauzonen mit Bakterien zu impfen, um deren Konzentration zu erhöhen und solche Bakterienstämme vorzusehen, die besonders für den Abbau der Alkohole geeignet sind.

Weitere Maßnahmen bestehen darin, den Abbauzonen zusammen mit dem Frostschutzmittel oder getrennt davon zusätzliche Nährmittel für die Bakterien zuzuführen, um auf diese Weise die Aktivität der Bakterien zu erhöhen.

Eine weitere erfindungsgemäße Maßnahme besteht darin, für ausreichende Luftzufuhr in der Abbauzone Sorge zu tragen, was durch geeignete Ausgestaltung derselben oder durch direkte Zuführung von Luft mittels Bodenrohren erfolgen kann.

Eine weitere Maßnahme besteht darin, daß der Abbauzone Wärme zugeführt wird, ebenfalls um die Aktivität der Bakterien zu erhöhen. Eine besonders wirksame Maßnahme ist die Zuführung von erwärmter Luft.

Diejenigen Maßnahmen, bei denen die Alkohole lange Zeit in der Abbauzone festgehalten werden, sind besonders geeignet, und zwar aus folgendem Grund: Eine Enteisung ist in mittleren Klimazonen nur im Winter erforderlich. Werden die Alkohole in der Abbauzone dann über die Sommermonate, wo keine neue Zufuhr von Alkohol mehr erfolgt, gehalten, steht ausreichend Zeit und auf Grund der höheren Temperatur Bakterienaktivität zur Verfügung, um einen restlosen Abbau der Alkohole zu gewährleisten.

Die Abbauzonen sind vorzugsweise seitlich längs den Betriebszonen angeordnet und können bei Start- und Landebahnen beispielsweise eine Breite von 2 bis 40 m aufweisen. Große Breiten von 40 m sind dann erforderlich, wenn durch Schneeräumgeräte alkoholbelasteter Schnee in weiter Entfernung der Landepiste verfrachtet wird. Ist die Schneebelastung nicht kritisch, genügen schmale Abbauzonen in Breiten von 2 bis 4 m.

Große Breiten können jedoch auch dann erforderlich werden, wenn die große Menge anfallenden Schmelzwassers und/oder Alkohols am Rande der Betriebsfläche eine entsprechende Fließwegverlängerung durch Folien bis zum Abbauzonenrand erforderlich machen. In diesem Falle kann die für den Abbau bevorzugte Schichtenfolge dem vertikalen Fließweg entsprechend in vertikaler Richtung in der Art von Dämmen aus schluffigem Sand zwischen Auffüllungen aus sandigem Kies aufgebaut werden.

Die Abbauzone kann in beliebiger Tiefe vorgesehen werden und wird vorzugsweise unterhalb der Gras-Humusschicht angeordnet.

Vorzugsweise sind die unterschiedlichen Schichten der Abbauzone durch Fließmatten untereinander und zum anstehenden Untergrund abgetrennt.

Gemäß einer weiteren bevorzugten Ausführungsform wird oberhalb der Abbauzone eine Sickerpackung aus gut durchlässigem Material, vorzugsweise Kies, vorgesehen, damit das Schmelzwasser mit den Alkoholen zur Abbauzone fließt und sich dort konzentriert und nicht etwa über die Abbauzone hinwegfließt und dann seitlich neben der Abbauzone versickert. In diesem Falle ist die Gras-Humusschicht ganz oder teilweise wegzulassen, damit auch bei Bodenfrost eine Versickerung des Schmelzwassers gewährleistet ist.

Alternativ kann dies auch durch geeignete Profilierung der Oberfläche erreicht werden. Man sieht sogenannte Sammelflächen vor, von denen die Alkohole zu den Abbauzonen geleitet werden.

Gemäß einer weiteren bevorzugten Ausführungsform wird das anstehende lockere Gestein im Untergrund herausgenommen und durch Sieben oder andere Maßnahmen in eine feinkörnige und eine grobkörnige Fraktion geteilt. Die feinkörnige Fraktion wird als Abbauzone als erstes wieder eingebracht und darauf die grobkörnige Fraktion als Sickerpackung angeordnet. Es erfolgt somit lediglich eine Umordnung des Untergrundes ohne daß zusätzliche Materialien erforderlich sind.

**Patentansprüche**

1.  Verfahren zur Verringerung der Belastung von Gewässern durch Alkohole bei Einsatz von Alkoholen zur Enteisung von Betriebsflächen, insbesondere Flugbetriebsflächen,
    dadurch **gekennzeichnet,**
    daß künstliche Abbauzonen in der Sickerzone des Untergrundes für das mit Alkohol belastete Schmelzwasser vorgesehen werden.

2.  Verfahren nach Anspruch 1,
    dadurch **gekennzeichnet**,
    daß die Abbauzone aus verschiedenen Schichten unterschiedlicher Körnung von Kies, Sand und Schluff besteht.

3.  Verfahren nach Anspruch 1 oder 2,
    dadurch **gekennzeichnet,**
    daß in der Abbauzone Adsorptionsmittel vorgesehen sind.

4.  Verfahren nach einem der Ansprüche 1 bis 3,
    dadurch **gekennzeichnet,**
    daß in der Abbauzone Absorptionsmittel vorgesehen sind.

5.  Verfahren nach einem der Ansprüche 1 bis 4,
    dadurch **gekennzeichnet**,
    daß die Abbauzone mit alkoholabbauenden Bakterien geimpft wird.

6. Verfahren nach einem der Ansprüche 1 bis 5, dadurch **gekennzeichnet,** daß der Abbauzone Nährmittel für die alkoholabbauenden Bakterien zugeführt werden.

7. Verfahren nach einem der Ansprüche 1 bis 6, dadurch **gekennzeichnet**, daß der Abbauzone Luft zugeführt wird.

8. Verfahren nach einem der Ansprüche 1 bis 7, dadurch **gekennzeichnet**, daß der Abbauzone Wärme zugeführt wird.

9. Verfahren nach einem der Ansprüche 1 bis 8. dadurch **gekennzeichnet,** daß oberhalb der Abbauzone Sickerpackungen vorgesehen werden.

10. Verfahren nach einem der Ansprüche 1 bis 9, dadurch **gekennzeichnet**, daß oberhalb der Abbauzonen Sammelflächen für die Alkohole vorgesehen werden.

11. Verfahren nach einem der Ansprüche 1 bis 10, dadurch **gekennzeichnet,** daß unter der Abbauzone eine Abdichtfolie vorgesehen ist.

## Claims

1. A method for reducing the pollution of waters by alcohols using alcohols to deice working surfaces, in particular aviatic surfaces, characterized in that artificial degrading zones are provided in the seeping zone of the subsoil for the melt water polluted with alcohol.

2. The method according to claim 1, characterized in that the degrading zone consists of different layers having a different grain of gravel, sand and coarse clay.

3. The method according to claim 1 or 2, characterized in that adsorbents are provided in the degrading zone.

4. The method according to any of claims 1 to 3, characterized in that absorbents are provided in the degrading zone.

5. The method according to any of claims 1 to 4, characterized in that the degrading zone is injected with alcohol-degrading bacteria.

6. The method according to any of claims 1 to 5, characterized in that the degrading zone is supplied with nutrients for the alcohol-degrading bacteria.

7. The method according to any of claims 1 to 6, characterized in that the degrading zone is supplied with air.

8. The method according to any of claims 1 to 7, characterized in that the degrading zone is supplied with heat.

9. The method according to any of claims 1 to 8, characterized in that seeping packages are provided above the degrading zone.

10. The method according to any of claims 1 to 9, characterized in that collecting surfaces for the alcohols are provided above the degrading zones.

11. The method according to any of claims 1 to 10, characterized in that a sealing sheet is provided under the degrading zone.

## Revendications

1. Procédé de diminution de la charge des eaux en alcools lors de l'utilisation des alcools pour dégivrer des surfaces actives, en particulier des surfaces actives d'avion, caractérisé par le fait que dans la zone de drainage du sous-sol sont prévues des zones artificielles de dégradation pour l'eau de fusion chargée d'alcool.

2. Procédé selon la revendication 1, caractérisé par le fait que la zone de dégradation est constituée de différentes couches de différente granulométrie de gravier, de sable et d'ardoise grossière.

3. Procédé selon la revendication 1 ou 2, caractérisé par le fait que dans la zone de dégradation sont prévus des agents d'adsorption.

4. Procédé selon l'une des revendications 1 à 3, caractérisé par le fait que dans la zone de dégradation sont prévus des agents d'absorption.

5. Procédé selon l'une des revendications 1 à 4, caractérisé par le fait que dans la zone de dégradation on injecte des bactéries qui dégradent l'alcool.

**6.** Procédé selon l'une des revendications 1 à 5, caractérisé
par le fait que l'on amène dans la zone de dégradation des aliments pour les bactéries qui dégradent l'alcool.

**7.** Procédé selon l'une des revendications 1 à 6, caractérisé par le fait que l'on amène de l'air dans la zone de dégradation.

**8.** Procédé selon l'une des revendications 1 à 7, caractérisé
par le fait que l'on amène de la chaleur dans la zone de dégradation.

**9.** Procédé selon l'une des revendications 1 à 8, caractérisé par le fait qu'au-dessus de la zone de dégradation on prévoit des garnitures pour drainage.

**10.** Procédé selon l'une des revendications 1 à 9, caractérisé
par le fait qu'au-dessus des zones de dégradation on prévoit des surfaces de collecte pour les alcools.

**11.** Procédé selon l'une des revendications 1 à 10, caractérisé
par le fait qu'en dessous de la zone de dégradation est prévue une feuille d'étanchéité.